# EUROPEAN PATENT SPECIFICATION

(11) **EP 0 416 788 B1**
(45) Date of publication and mention of the grant of the patent: **10.08.1994**
(21) Application number: 90309305.2
(22) Date of filing: 24.08.1990
(51) Int. Cl.: B60C 23/00, F16K 31/42

(54) **Reversible poppet valve cartridge**
Gehäuse für reversierbares Spindelventil
Cartouche de valve à tiroir réversible

(30) Priority: 05.09.1989 US 402409; 05.09.1989 US 402396
(43) Date of publication of application: 13.03.1991
(73) Proprietor: EATON CORPORATION, Cleveland Ohio 44114 (US)
(72) Inventor: Schultz, Gary Richard, Kalamazoo, Michigan 49009 (US); Runels, THomas Lee, Battle Creek, Michigan 49015 (US); McWilliams, Dennis Michael, Galesburg, Michigan 49053 (US)
(74) Representative: Wright, Peter David John

(56) References cited:
- EP-A- 0 341 031
- EP-A- 0 358 349
- DE-A- 2 315 424
- FR-A- 2 623 594
- FR-A- 2 634 269
- OLHYDRAULIK UND PNEUMATIK. vol. 7, no. 5, May 1963, MAINZ DE pages 179 - 186;Zoebl: "Magnetventile für hydraulische und pneumatische Anlagen"

## Description

This invention relates to poppet valve cartridges for solenoid controlled, pilot air actuated valve assemblies.

Solenoid controlled, pilot air actuated valve assemblies having poppet valve cartridges are known in the prior art. U.S. Patent Application serial number 232,262 filed 08-15-88 (not pre-published family member of EP-A-358 349) discloses such a valve assembly in a vehicular central tire inflation system (CTIS), which system is also disclosed in U.S. Patent 4,640,331. Both of these documents are incorporated herein by reference.

In the above mentioned application there is disclosed two normally open and one normally closed solenoid controlled, pilot air actuated valve assemblies for controlling inflation and deflation of vehicle tires from a central location. When each of these valve assemblies employs a poppet valve cartridge, they differ only with respect to whether the cartridge is normally open or closed, and only with respect to passages which direct fluid to and from a bore containing the cartridge in a body of the valve assembly.

A poppet valve assembly according to the preamble of claim 1 is described in Ölhydraulik und Pneumatik, vol. 7n. 5, May 1963, H. Zoebl, Magnetventile für hydraulische und pneumatische Anlagen, pages 179-186.

In accordance with the present invention there is provided a valve assembly including a valve body having a bore with an axis and first and second axially separated passage openings in cylindrical walls of the bore intermediate first and second ends of the bore;
a solenoid valve assembly mounted on the valve body;
a poppet valve cartridge disposed in the bore, the cartridge comprising:
a sleeve assembly having an inner volume defined by first and second annular members concentric to the bore axis and axially spaced apart by an apertured means extending therebetween with the first annular member fixed axially intermediate the openings and the second member fixed axially at the second end of the bore; and
a poppet assembly including a piston slidably disposed in the bore intermediate the first end of the bore and the second passage opening, the piston being axially movable away from the first end of the bore by pressurized fluid;
characterised by the piston being movable in response to the energization of the solenoid valve assembly, the solenoid valve being operative when energised to direct a pressurized fluid to the first end of the bore and when de-energized to exhaust the fluid in the first end, by the sleeve assembly comprising first and second mirror image valve seats facing axially in opposite directions about an inner periphery of a central opening in the first annular member, and by the poppet assembly further including a spring reacting between the sleeve assembly and the piston for applying a force biasing the piston toward the first end of the bore and away from the sleeve assembly, a generally axial facing poppet surface defined by a poppet concentrically affixed to a stem affixed at one end to the piston and extending axially from the piston through the central opening and slidably received in a guide opening in the second annular member, the stem being affixable to the piston with the poppet surface disposed between the piston and the first seat and moved into abutting engagement therewith by the pressurized fluid in response to energization of the solenoid valve assembly, whereby the cartridge is normally open, and the stem being affixable to the piston with the poppet surface abuttingly engaging the second valve seat and movable therefrom by the pressurized fluid in response to energization of the solenoid valve assembly, whereby the cartridge is normally closed.

An advantage of the present invention is the provision of a modular cartridge which is readily assembled of identical components to be either normally open or closed, and which may direct fluid via standard passages in the valve assembly body, whereby normally open or closed valve assemblies are provided by a single design and inventory or cartridge components and valve assembly bodies.

The poppet valve cartridge of the present invention is shown in the accompanying drawing in which:
Figure 1 is a cross-sectional view of a solenoid controlled, pilot air actuated valve showing a normally open configuration of the cartridge;
Figure 2 is a partial cross-sectional view of a normally closed configuration of the cartridge; and
Figure 3 is a second embodiment of a poppet assembly of the cartridge.

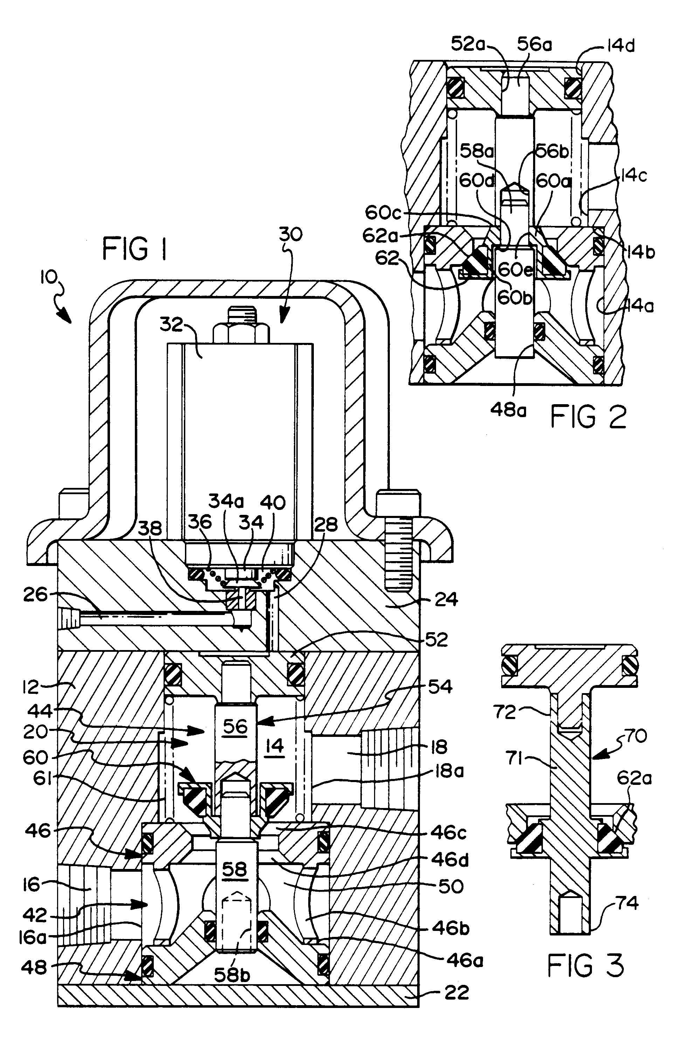

Looking now at Figures 1 and 2 therein is illustrated a valve mechanism 10 including a valve body or housing 12 having a stepped bore 14 and passages 16,18, a poppet valve cartridge 20 disposed in the bore, a bottom-plate 22 closing the bottom of the bore, a top-plate 24 covering the top of the bore and having passages 26,28 for directing pilot air from an unshown source of pressurized air to the top of the bore via a normally closed solenoid valve assembly 30 of a known type.

Solenoid valve assembly 30 includes a coil assembly 32 and an axially movable plunger 34 having an end 34a biased by a spring 36 into engagement with a valve seat 38 communicating with passage 26. When the solenoid coil is energized, plunger end 34a moves away from seat 38 against the bias of spring 36 to allow pilot air to flow to the top of bore 14 via a space 40 and passage 28. The other end of plunger 34, in known manner, controls a passage for venting space 40 when the plunger end 34a is in engagement with valve seat 38.

Cartridges 20 in Figures 1 and 2 are composed of the same component parts with the parts in Figure 1 assembled to provide a normally open cartridge and with the same parts in Figure 2 assembled to provide a normally closed cartridge. Cartridge 20 includes a sleeve assembly 42 and a poppet assembly 44. The sleeve assembly includes first and second annular members 46,48 disposed in a greater diameter bore portion 14a of bore 14. The members are axially separated by a skirt or apertured means 46a extending therefrom and formed separately or with either of the members. Herein, the skirt is formed with member 46. The skirt includes a plurality of apertures 46b for allowing fluid communication between an inner volume 50 and an opening 16a of passage 16 into the cylindrical walls of bore portion 14a. The annular members straddle passage opening 16a and include outer annular portions which sealingly cooperate with the bore walls via O-ring seals. Annular member 46 abuts a bore shoulder 14b and is axially fixed thereagainst by member 48 which abuts the bottom plate 22. Member 46 includes first and second mirror image, conical valve seats 46c,46d facing generally in axially opposite directions about a periphery of a central opening which is selectively opened and closed to control fluid communication between the inner volume 50 and an opening 18a of passage 18 in the cylindrical walls of an intermediate diameter bore portion 14c of bore 14.

Poppet assembly 44 includes a piston 52 slidably and sealingly disposed in a lesser diameter bore portion 14d of bore 14, a stem 54 including identical first and second elongated members 56,58, and a poppet member 60. Bore portions 14c,14d may be the same in diameter. The piston is biased away from the sleeve assembly by the force of a spring 61 which, herein, reacts between the piston and the sleeve assembly. The spring may be located in other positions, for example, between the lower-end of stem 54 and bottom plate 22. Members 56,58 each have a reduced diameter end portion 56a,58a extending axially from one end and an axially extending opening 56b,58b in the other end. The poppet member includes a transverse flange portion 60a and a skirt portion 60b extending axially therefrom for supporting an elastomeric member 62 defining a conical poppet surface 62a. The poppet surface is axially displaced from the flange, faces axially in the direction of a first surface 60c of the flange and opposite a second surface 60d thereof. End portion 56a is fixedly received in an opening 52a in piston 52 such that member 56 extends axially therefrom along an axis common to the piston, the bore and annular members 46,48. End portion 58a extends through an opening 60e in poppet member flange 60a and is fixedly received in the opening 56b, thereby securing poppet member 60 between adjacent ends of the elongated members to provide a normally open cartridge when the poppet surface 62a is between piston 52 and first annular member 46 as shown in Figure 1 or to provide a normally closed cartridge when poppet surface 62a is below the first annular member and engaged with valve seat 46d as shown in Figure 2. The remainder of elongated member 58 extends along the common axis, through the central opening in first member 46, and slidingly and sealingly into a guide opening 48a in second annular member 48. The area between the second annular member and the bottom plate may be provided with a vent passage, not shown. The bottom and top plates are secured and sealed to the valve body in known manner. Any of several known means may be used to fix the stem ends to the piston and to each other, for example, press fits or screw threads.

In the normally open cartridge configuration of Figure 1, selective energization of solenoid coil 32 allows pressurized pilot air to flow to the top of bore 14 and apply a force to piston 52 counter to the force of spring 61 for moving poppet surface 62a into abutting engagement with the first valve seat 46c. In the normally closed configuration of Figure 2, spring 61 biases poppet surface 62a into abutting engagement with the second valve seat 46d and the force of the pilot air selectively acting on piston 52 moves poppet surface 62a away from seat 46d.

Figure 3 illustrates a second poppet assembly embodiment 70 employing a stem 71 and poppet formed as a single member 70 having first and second ends 72,74 which merely need to be reversed to convert the cartridge assembly from the normally closed configuration in Figure 3 to the normally open configuration of Figure 1.

Two embodiments of the invention have been disclosed for illustrative purposes. Many variations and modifications of the embodiments are believed to be within the scope of the claims.

## Claims

1. A valve assembly (10) including a valve body (12) having a bore (14) with an axis and first and second axially separated passage openings (16a, 18a) in cylindrical walls of the bore (14) intermediate first and second ends (14d, 14a) of the bore;
a solenoid valve assembly (30) mounted on the valve body;
a poppet valve (20) cartridge disposed in the bore, the cartridge comprising:
a sleeve assembly (42) having an inner volume (50) defined by first and second annular members (46, 48) concentric to the bore axis and axially spaced apart by an apertured means (46a) extending therebetween with the first annular member (46) fixed axially intermediate the openings (16a, 18a) and the second member (48) fixed axially at the second end (14a) of the bore; and
a poppet assembly (70) including a piston (52) slidably disposed in the bore (14) intermediate the first end (14d) of the bore (14) and the second passage opening (18a), the piston being axially movable away from the first end of the bore by pressurized fluid;
characterised by the piston being movable in response to the energization of the solenoid valve assembly, the solenoid valve being operative when energised to direct a pressurized fluid to the first end (14d) of the bore and when de-energized to exhaust the fluid in the first end, by the sleeve assembly (42) comprising first and second mirror image valve seats (46c, 46d) facing axially in opposite directions about an inner periphery of a central opening in the first annular member (46), and by the poppet assembly further including a spring (61) reacting between the sleeve assembly (42) and the piston (52) for applying a force biasing the piston toward the first end (14d) of the bore (14) and away from the sleeve assembly (42), a generally axial facing poppet surface (62a) defined by a poppet (60) concentrically affixed to a stem (54; 71) affixed at one end to the piston (52) and extending axially from the piston (52) through the central opening and slidably received in a guide opening (48a) in the second annular member (48), the stem (54; 71) affixable to the piston (52) with the poppet surface disposed between the piston and the first seat (46c) and moved into abutting engagement therewith by the pressurized fluid in response to energization of the solenoid valve assembly (30), whereby the cartridge (20) is normally open, and the stem (54; 71) being affixable to the piston (52) with the poppet surface (62a) abuttingly engaging the second valve seat and movable therefrom by the pressurized fluid in response to energization of the solenoid valve assembly (30), whereby the cartridge is normally closed.

2. The valve assembly of claim 1, wherein the guide opening (48a) is in sealing relation with the stem.

3. The valve assembly of claim 1 or 2, wherein:
the bore (14) has greater and lesser diameter portions (14a, 14d), respectively at its second and first ends and a shoulder (14b) intermediate the passage openings (16a, 18a), the shoulder (14b) defining the inner axial extent of the greater diameter portion (14a), the piston (52) being in sliding sealing relation with the walls of the lesser diameter portion (14d), and the sleeve assembly (42) disposed in the greater diameter portion (14d) with the first annular member (46) thereof abutting the shoulder (14b).

4. The valve assembly of claim 1, 2, or 3, wherein:
the stem (71) is a single member having first and second ends (72,74) with the poppet surface facing the first end and being axially spaced further from the first end (72) than from the second end (74), the first end (72) affixed to the piston to form the normally closed cartridge, and the second end (74) affixed to the piston to form the normally open cartridge.

5. The valve assembly of claim 1, 2, or 3, wherein the poppet is a separate poppet member (60) having a first side (60c) facing axially in the direction of the poppet surface (62a), the stem including a first elongated portion (56) and a second elongated member (58), the elongated portion and member having adjacent axial ends (56b,58b) with the poppet member (60) abuttingly fixed therebetween, the other axial ends (56a,58a) of the elongated portion and member respectively affixed to the piston (52) and slidably extending through the guide opening (48a), the first side (60c) of the poppet member (60) abutting the adjacent end (560) of the first elongated portion (56) to form the normally closed cartridge wherein the poppet surface (62a) is axially spaced further from the piston (52) than the other end (58b) of the second elongated member (58), and the first side (60c) abutting the adjacent end (58a) of the elongated member (58) to form the normally open cartridge wherein the poppet surface (62a) is axially spaced further from the other end (58b) of the second elongated member than from the piston.

6. The valve assembly of claim 5, wherein the elongated portion (56) is a separate first elongated member (56) identical to the first elongated member (58), one of the adjacent ends (58a) having a reduced diameter portion (58a) extending axially through an opening (60d) in the poppet member (60) and secured in an opening (56b) in the adjacent end (56b) of the other member (56).

7. The valve assembly of claim 6, wherein the reduced diameter portion (58a) extends from the adjacent end (58a) of the second elongated member (58).

## Patentansprüche

1. Ventilanordnung (10), die folgendes aufweist:
einen Ventilkörper (12) mit einer Bohrung (14) mit einer Achse und ersten und zweiten axial beabstandeten Durchlaßöffnungen (16a, 18a) in zylindrischen Wänden der Bohrung (14), und zwar benachbart zu ersten und zweiten Enden (14d, 14a) der Bohrung;
eine Elektromagnetventilanordnung (30), die an dem Ventilkörper angebracht ist;
eine Sitzventil-(20)-Patrone, die in der Bohrung angeordnet ist, wobei die Patrone folgendes aufweist:
eine Hülsenanordnung (42) mit einem Innenvolumen (50), das definiert wird durch erste und zweite ringförmige Glieder (46, 48), die konzentrisch zur Bohrungsachse liegen und axial beabstandet sind durch mit Löchern versehene Mittel (46a), sie sich dazwischen erstrecken, wobei das erste ringförmige Glied (46) axial fest zwischen den Öffnungen (16a, 18a) ist und das zweite Glied (48) fest axial an dem zweiten Ende (14a) der Bohrung liegt; und
eine Sitzventilanordnung (70), die einen Kolben (52) aufweist, der gleitbar in der Bohrung (14) angeordnet ist, und zwar zwischen dem ersten Ende (14d) der Bohrung (14) und der zweiten Durchlaßöffnung (18a), wobei der Kolben axial wegbewegbar ist von dem ersten Ende der Bohrung, und zwar durch Druckströmungsmittel;
dadurch **gekennzeichnet,** daß der Kolben bewegbar ist ansprechend auf die Erregung der Elektromagnetventilanordnung; wobei das Elektromagnetventil betriebsmäßig zum Leiten eines Druckströmungsmittels zu dem ersten Ende (14d) der Bohrung dient, wenn es erregt wird, und zum Auslassen des Strömungsmittels aus dem ersten Ende, wenn es entregt wird,
daß die Hülsenanordnung (42) erste und zweite spiegelbildliche Ventilsitze (46c, 46d) aufweist, die axial in entgegengesetzte Richtungen um einen Innenumfang einer Mittelöffnung in dem ersten ringförmigen Glied (46) weisen und
daß die Sitzventilanordnung ferner folgendes aufweist:
eine Feder (61), die zwischen der Hülsenanordnung (42) und dem Kolben (52) wirkt zum Anlegen einer Kraft, die den Kolben in Richtung des ersten Endes (14d) der Bohrung (14) und weg von der Hülsenanordnung (42) vorspannt,
eine im allgemeinen axial weisende Sitzventiloberfläche (62a) definiert durch ein Sitzventil (60), das konzentrisch an einem Schaft (54; 71) befestigt ist, der an einem Ende des Kolbens (52) befestigt ist und sich axial von dem Kolben (52) durch die Mittelöffnung erstreckt und gleitbar aufgenommen ist in einer Führungsöffnung (48a) des zweiten ringförmigen Gliedes (48), wobei der Schaft (54; 71) an dem Kolben (52) befestigbar ist, wobei die Sitzventiloberfläche zwischen dem Kolben und dem ersten Sitz (46c) angeordnet ist und in anliegendem Eingriff damit bewegt wird durch das Druckströmungsmittel ansprechend auf die Erregung der Elektromagnetventilanordnung (30), wodurch die Patrone (20) normalerweise offen ist und wobei der Schaft (54; 71) an dem Kolben (52) befestigbar ist mit der Sitzventiloberfläche (62a) in anliegendem Eingriff mit dem zweiten Ventilsitz und von diesem wegbewegbar ist durch das Druckströmungsmittel ansprechend auf die Erregung der Elektromagnetventilanordnung (30), wodurch die Patrone normalerweise geschlossen ist.

2. Ventilanordnung nach Anspruch 1, wobei die Führungsöffnung (48a) in abdichtender Beziehung mit dem Schaft steht.

3. Ventilanordnung nach Anspruch 1 oder 2, wobei die Bohrung (14) Teile (14a, 14d) mit größerem bzw. geringerem Durchmesser an seinen zweiten und ersten Enden und eine Schulter (14b) zwischen den Durchlaßöffnungen (16a, 18a) besitzt, wobei die Schulter (14b) die innere axiale Ausdehnung des Teils mit größerem Durchmesser (14a) definiert, wobei der Kolben (52) in gleitender Abdichtbeziehung mit den Wänden des Teils mit geringerem Durchmesser (14d) steht und die Hülsenanordnung (42) in dem Teil mit größerem Durchmesser (14a) angeordnet ist, wobei dessen erstes ringförmiges Glied (46) an der Schulter (14b) anliegt.

4. Ventilanordnung nach Anspruch 1, 2 oder 3, wobei der Schaft (71) ein einzelnes Glied mit ersten und zweiten Enden (72, 74) ist, wobei die Sitzventiloberfläche in Richtung des ersten Endes weist und axial weiter von dem ersten Ende (72) als von dem zweiten Ende (74) beabstandet ist, wobei das erste Ende (72) an dem Kolben befestigt ist, um die normalerweise geschlossene Patrone zu bilden und das zweite Ende (74) an dem Kolben befestigt ist, um die normalerweise offene Patrone zu bilden.

5. Ventilanordnung nach Anspruch 1, 2 oder 3, wobei das Sitzventil ein separates Sitzventilglied (60) ist mit einer ersten Seite (60c), die axial in Richtung der Sitzventiloberfläche (62a) weist, wobei der Schaft einen ersten langgestreckten Teil (56) und ein zweites langgestrecktes Glied (58) aufweist, wobei der langgestreckte Teil und das langgestreckte Glied benachbarte axiale Enden (56b, 58b) besitzen, und zwar mit dem Sitzventilglied (60) anliegend dazwischen befestigt, wobei die anderen axialen Enden (56a, 58a) des langgestreckten Teils und des langgestreckten Gliedes jeweils an dem Kolben (52) befestigt sind und sich gleitbar durch die Führungsöffnung (48a) erstrecken, wobei die erste Seite (60c) des Sitzventilgliedes (60) an dem benachbarten Ende (56b) des ersten langgestreckten Teils (56) anliegt, um die normalerweise geschlossene Patrone zu bilden, wobei die Sitzventiloberfläche (62a) axial weiter von dem Kolben (52) beabstandet ist als das andere Ende (58b) des zweiten langestreckten Gliedes (58) und wobei die erste Seite (60c) an dem benachbarten Ende (58a) des langgestreckten Gliedes (58) anliegt, um die normalerweise offene Patrone zu bilden, bei der die Sitzventiloberfläche (62a) axial weiter von dem anderen Ende (58b) des zweiten langgestreckten Gliedes als von dem Kolben beabstandet ist.

6. Ventilanordnung nach Anspruch 5, wobei der langgestreckte Teil (56) ein separates erstes langgestrecktes Glied (56) ist, welches identisch zu dem ersten langgestreckten Glied (58) ist, wobei eines der benachbrten Enden (58a) einen Teil mit reduziertem Durchmesser (58a) besitzt, der sich axial durch eine Öffnung (60d) in dem Sitzventilglied (60) erstreckt und in einer Öffnung (56b) in dem benachbarten Ende (56b) des anderen Endes (56) befestigt ist.

7. Ventilanordnung nach Anspruch 6, wobei der Teil mit reduziertem Durchmesser (58a) sich von dem benachbarten Ende (58a) des zweiten langgestreckten Gliedes (58) erstreckt.

## Revendications

1. Ensemble de soupape (10) comprenant un corps de soupape (12) possédant un perçage (14) pourvu d'un axe et des première et seconde ouvertures de passage (16a, 18a) séparées axialement et ménagées dans des parois cylindriques du perçage (14) entre des première et seconde extrémités (14d, 14a) du perçage;
un ensemble formant soupape électromagnétique (30) monté sur le corps de soupape;
une cartouche de soupape à clapet (20) disposée dans le perçage, la cartouche comprenant :
un ensemble en forme de manchon (42) possédant une chambre intérieure (50) définie par des premier et second éléments annulaires (46, 48) qui sont concentriques à l'axe du perçage et sont séparés axialement par des moyens ajourés (46a) s'étendant entre eux, tandis que le premier élément annulaire (46) est fixé axialement entre les ouvertures (17a, 18a) et que le second élément (48) est fixé axialement au niveau de la seconde extrémité (14a) du perçage; et
un ensemble formant clapet (70) comprenant un piston (52) monté de manière à pouvoir glisser dans le perçage (14) entre le première extrémité (14a) de ce perçage et la seconde ouverture de passage (18a), le plongeur pouvant être écarté axialement de la première extrémité du perçage, par un fluide sous pression;
caractérisé en ce que le plongeur est déplaçable en réponse à l'activation de l'ensemble formant soupape électromagnétique, la soupape électromagnétique étant active, lorsqu'elle est excitée, pour diriger un fluide sous pression en direction de la première extrémité (14d) du perçage et pour évacuer, lorsqu'elle est désexcitée, le fluide situé dans la première extrémité, que l'ensemble en forme de manchon (42) comprend des premier et second sièges de soupape symétriques (46c, 46d) tournés axialement dans des directions opposées, autour d'une périphérie intérieure d'une ouverture centrale ménagée dans le premier élément annulaire (46), et en ce que l'ensemble de soupape comprend en outre un ressort (61) qui réagit entre l'ensemble en forme de manchon (42) et le piston (52) pour appliquer une force sollicitant le plongeur en direction de la première extrémité (14d) du perçage (14) et en l'écartant de l'ensemble en forme de manchon (42), une surface (62a) du clapet tournée d'une manière générale dans la direction axiale et définie par un clapet (60) fixé concentriquement à une tige (54; 71), dont une extrémité est fixée au piston (52) et qui s'étend axialement à partir du piston (62) à travers l'ouverture centrale et est logée, avec possibilité de glissement, dans une ouverture de guidage (48a) ménagée dans le second élément annulaire (48), la tige (54; 71) pouvant être fixée au piston (52) avec la surface du clapet disposée entre le piston et le premier siège (46a) et amenée en aboutement contre ce siège par le fluide sous pression, en réponse à l'excitation de l'ensemble formant soupape électromagnétique (30), ce qui a pour effet que la cartouche (20) est normalement ouverte, et la tige (54; 71) pouvant être fixée au piston (52) avec la surface (62a) du clapet s'applique en butée contre le second siège de soupape et pouvant en être écartée par le fluide sous pression en réponse à l'excitation de l'ensemble formant soupape électromagnétique (30), ce qui conduit à ce que la cartouche est normalement fermée.

2. Ensemble de soupape selon la revendication 1, dans lequel l'ouverture de guidage (48a) est dans une relation d'étanchéité avec la tige.

3. Ensemble de soupape selon la revendication 1 ou 2, dans lequel :
le perçage (14) possède des parties de diamètre supérieur et de diamètre inférieur (14a, 14d), qui sont situées respectivement au niveau de ses seconde et première extrémités, et un épaulement (14b) situé entre les ouvertures de passage (16a, 18a), l'épaulement (14b) définissant l'étendue axiale intérieure de la partie de diamètre supérieur (14a), le piston (52) étant dans une relation d'étanchéité avec glissement par rapport aux parois de la partie de diamètre inférieure (14d), et l'ensemble en forme de manchon (42) est disposé dans la partie de diamètre supérieur (14d) de telle sorte que son premier élément annulaire (46) est en butée contre l'épaulement (14b).

4. Ensemble de soupape selon la revendication 1, 2 ou 3, dans lequel :
la tige (71) est un élément unique possédant des première et seconde extrémités (72, 74), la surface du clapet étant tournée vers la première extrémité et étant plus espacée, axialement, de la première extrémité (72) que de la seconde extrémité (74), la première extrémité (72) étant fixée au piston pour former la cartouche normalement fermée, tandis que la seconde extrémité (74) est fixée au piston pour former la cartouche normalement ouverte.

5. Ensemble de soupape selon la revendication 1, 2 ou 3, dans lequel le clapet est un élément séparé (60) possédant une première face (60c) tournée axialement en direction de la surface (62a) du clapet, la tige comprenant une première partie allongée (56) et un second élément allongé (58), la partie allongée et l'élément allongé possédant des extrémités axiales adjacentes (56b, 58b) tandis que l'élément de clapet (60) est fixé en aboutement entre ces extrémités, les autres extrémités axiales (56a, 58a) de la partie allongée et de l'élément allongé étant fixées respectivement au piston (52) et traversant, avec possibilité de glissement, l'ouverture de guidage (48a), la première face (60c) de l'élément de clapet (60) étant en butée contre l'extrémité adjacente (56b) de la première partie allongée (56) de manière à former la cartouche normalement fermée, dans laquelle la surface (62a) du clapet est plus espacée, axialement, du piston (52) que de l'autre extrémité (58b) du second élément allongé (58), et la première face (60c) étant en butée contre l'extrémité adjacente (58a) de l'élément allongé (58) pour former la cartouche normalement ouverte, dans laquelle la surface (62a) du clapet est plus espacée, axialement, de l'autre extrémité (58b) du second élément allongé que du plongeur.

6. Ensemble de soupape selon la revendication 5, dans lequel la partie allongée (56) est un premier élément allongé séparé (56) identique au premier élément allongé (58), l'une des extrémités adjacentes (58a) possédant une partie de diamètre réduit (58a) traversant axialement une ouverture (60d) ménagée dans l'élément de clapet (60) et étant fixée dans une ouverture (56b) ménagée dans l'extrémité adjacente (56b) de l'autre élément (56).

7. Ensemble de soupape selon la revendication 6, dans lequel la partie de diamètre réduit (58a) s'étend à partir de l'extrémité adjacente (58a) du second élément allongé (58).
